# EUROPÄISCHE PATENTSCHRIFT

(11) **EP 1 380 064 B1**
(45) Veröffentlichungstag und Bekanntmachung des Hinweises auf die Patenterteilung: **31.08.2005**
(21) Anmeldenummer: 02712777.8
(22) Anmeldetag: 14.02.2002
(51) Int. Cl.: H01M 8/04

(54) **VERFAHREN ZUM BETRIEB EINER BRENNSTOFFZELLE IM MINIMAL- ODER TEILLASTBEREICH**
METHOD FOR OPERATING A FUEL CELL IN THE MINIMAL- OR PARTIAL-LOAD REGION
PROCEDE POUR FAIRE FONCTIONNER UNE PILE A COMBUSTIBLE DANS LA PLAGE DE CHARGE MINIMALE OU PARTIELLE

(30) Priorität: 27.02.2001 DE 10109379
(43) Veröffentlichungstag der Anmeldung: 14.01.2004
(73) Patentinhaber: DaimlerChrysler AG, 70567 Stuttgart (DE)
(72) Erfinder: BÖHM, Gustav, 88662 Überlingen (DE)
(86) Internationale Anmeldenummer: PCT/DE2002/000526
(87) Internationale Veröffentlichungsnummer: WO 2002/069427

(56) Entgegenhaltungen:
- EP-A- 0 341 189
- DE-C- 19 630 842
- US-A- 4 202 772
- US-A- 5 366 821
- PATENT ABSTRACTS OF JAPAN vol. 010, no. 179 (E-414), 24. Juni 1986 (1986-06-24) & JP 61 027071 A (MITSUBISHI ELECTRIC CORP), 6. Februar 1986 (1986-02-06)
- PATENT ABSTRACTS OF JAPAN vol. 1996, no. 01, 31. Januar 1996 (1996-01-31) & JP 07 249419 A (HITACHI LTD), 26. September 1995 (1995-09-26)
- PATENT ABSTRACTS OF JAPAN vol. 010, no. 087 (E-393), 5. April 1986 (1986-04-05) & JP 60 230364 A (TOSHIBA KK), 15. November 1985 (1985-11-15)

## Beschreibung

Die Erfindung betrifft ein Verfahren zum Betrieb einer PEM-(Proton Elektrolyt Membran) oder DMFC-Brennstoffzelle (Direct Methanol Fuel Cell) im Minimal- oder Teillastbereich nach dem Oberbegriff des Patentanspruchs 1 sowie eine PEM- oder DMFC-Brennstoffzelle, die zum Betrieb im Minimal- oder Teillastbereich geeignet ist, nach dem Oberbegriff des Patentanspruchs 10.

Bei Brennstoffzellensystemen, welche eine große Zahl von Zellen aufweisen, treten im Minimal- oder Teillastbereich Verteilungsprobleme der Reaktionsmedien von Zelle zu Zelle und innerhalb einer Zelle auf. Aufgrund der in diesen Lastbereichen geforderten geringeren Menge an Reaktionsmedien kommt es zu einer Unterversorgung der aktiven Zellfläche, woraus Zellenausfälle resultieren. Außerdem kommt es zu Feuchteproblemen an der aktiven Zellfläche, da aufgrund der durch die geringe Menge an Reaktionsmedium bedingte geringe Strömungsgeschwindigkeit kein ausreichender Wasseraustrag aus der Brennstoffzelle stattfinden kann. Um diese Zellenausfälle in den unteren Lastbereichen zu vermeiden, werden die Brennstoffzellensysteme üblicherweise in höheren Lastbereichen und dadurch mit einer größeren Menge an Reaktionsmedien betrieben, als es erforderlich ist.

Bei DMFC-Brennstoffzellensystemen kommt es darüber hinaus in niedrigen Lastbereichen zu einem Methanoldurchbruch. Dabei diffundiert der Brennstoff Methanol durch die aktive Zellfläche (Membran), wodurch es zu einer Erniedrigung des Wirkungsgrads in diesem Lastbetrieb kommt.

Die japanische Patentanmeldung JP 61027071 A beschäftigt sich damit, die elektrische Stromdichte in einer Elektrode bei sich ändernder Stromstärke annähernd konstant zu halten. Um diesen Zweck zu erfüllen, wird die elektrochemisch aktive Fläche der Elektrode in Abhängigkeit von der Stromstärke, d.h. lastabhängig, vergrößert oder verkleinert (da die elektrische Stromdichte die elektrische Stromstärke je Flächeneinheit (elektrochemisch aktive Fläche) eines durch ein Flächenelement (Elektrode) tretenden elektrischen Stroms ist, kann die elektrische Stromdichte annähernd konstant gehalten werden, wenn man bei sinkender Stromstärke die Flächeneinheit verringert und bei steigender Stromstärke die Flächeneinheit erhöht). Dazu sind Mittel (Türen) vorgesehen, um Zuführungskanäle für Reaktionsmedien zur Zellfläche, an der die Brennstoffzellenreaktion stattfindet (elektrochemisch aktive Fläche), zu öffnen oder zu verschließen. Das Öffnen und Verschließen der Abführungskanäle für die Reaktionsmedien sowie entsprechende Mittel dafür sind jedoch nicht vorgesehen.

Eine Aufgabe der Erfindung ist es, ein Verfahren anzugeben, durch das eine Brennstoffzelle mit hohem Wirkungsgrad im unteren Lastbereich stabil betrieben werden kann und ein unerwünschtes Nachlaufen von Teilen der Elektrode, deren Reaktionsmedien-Zufuhr unterbrochen wird oder ist, im Wesentlichen verhindert werden kann. Eine weitere Aufgabe der Erfindung ist es, eine Brennstoffzelle zur Verfügung zu stellen, die zur Durchführung des Verfahrens geeignete Mittel aufweist.

Diese Aufgaben werden durch das Verfahren gemäß Patentanspruch 1 und die PEM- oder DMFC-Brennstoffzelle gemäß Patentanspruch 10 gelöst. Vorteilhafte Ausführungen sind Gegenstand von Unteransprüchen.

Gemäß der Erfindung wird die Größe der Zellfläche, an der die Brennstoffzellenreaktion stattfindet, durch Öffnen oder Verschließen von Zuführungskanälen, die der Zuführung von einem oder beiden Reaktionsmedien an die Zellfläche dienen, verändert. Insbesondere münden die Zuführungskanäle in Kanalbereiche, die in Fluidverteilerplatten (auch als Bipolarplatten bezeichnet) der Brennstoffzelle eingearbeitet sind. In diesen Kanalbereichen der Fluidverteilerplatten werden die zugeführten Reaktionsmedien an die Zellfläche transportiert.

Gemäß der Erfindung werden auch die Abführungskanäle für die Abführung von einem oder von beiden Reaktionsmedien von der Zellfläche zu verschlossen. Dadurch wird verhindert, dass ein Reaktionsmedium von einem Abführungskanal aus an die Zellfläche zurückfließt, welcher durch einen verschlossenen Zuführungskanal bereits verschlossen ist. Außerdem können vorteilhaft auch die Abführungskanäle für das Kühlmedium verschlossen werden.

Mittels des erfindungsgemäßen Verfahrens ist es möglich, entweder die Kanalbereiche des Reaktanten oder die Kanalbereiche des Oxidanten zu öffnen oder zu verschließen. Es ist aber darüber hinaus auch möglich, die Kanalbereiche beider Reaktionsmedien zu öffnen oder zu verschließen.

Die Größe der Zellfläche kann erfindungsgemäß an die für einen bestimmten Lastzustand der Brennstoffzelle erforderliche Menge des Reaktanten und/oder Oxidanten angepaßt werden. Dadurch wird verhindert, dass es beim Betrieb der Brennstoffzelle im unteren Lastbereich in bestimmten Bereichen der Zellfläche zu einer Unterversorgung durch die Reaktionsmedien kommt. Erfindungsgemäß fließen die Reaktionsmedien nur durch die geöffneten Zuführungskanäle, was dazu führt, dass die Brennstoffzelle mit der, für diesen unteren Lastzustand der Brennstoffzelle benötigten geringen Menge an Reaktionsmedien optimal versorgt wird. Daraus ergibt sich ein stabiler Brennstoffzellenbetrieb und eine Erhöhung des Wirkungsgrads der Brennstoffzelle, insbesondere bei DMFC.

Ein weiterer Vorteil ist, dass mittels der erfindungsgemäßen Anpassung der Zellfläche an die erforderliche Menge an Reaktionsmedium der Methanoldurchbruch bei DMFC-Brennstoffzellen vermindert wird.

Ein weiterer Vorteil der vorliegenden Erfindung besteht darin, daß die Spannungsspreizung bei unterschiedlichen Lastzuständen verringert werden kann.

Unter einem Lastzustand wird ein Betriebszustand einer Brennstoffzelle oder eines Brennstoffzellenstapels verstanden, bei dem der Brennstoffzelle oder dem Brennstoffzellenstapel elektrische Leistung entnommen wird. Eine Last entspricht damit einer entnommenen elektrischen Leistung. Elektrische Leistung (P), elektrischer Strom (I) und elektrische Spannung (U) hängen über die Gleichung P = U · I zusammen.

Unter Spannungsspreizung wird die Differenz zwischen der Spannung bei Vollast und der Spannung bei Nullast (Leerlauf einer Brennstoffzelle) verstanden. Ursache für unterschiedliche Spannungen bei unterschiedlichen Lastzuständen ist die für eine Brennstoffzelle charakteristische Stromdichte-Spannungs-Kennlinie (kurz: i-U-Kennlinie, vgl. dazu z.B. Larminie/Dicks, "Fuel Cell Systems Explained", Wiley 2001, S. 37 ff.). Die Stromdichte (i) ist der Strom pro Flächeneinheit (A): i = I/A.

Bei geringer Last fließt nur ein geringer Strom I, der einer geringen Stromdichte i entspricht. Gemäß üblicher i-U-Kennlinien liegt bei geringen Stromdichten i eine hohe Spannung an, die im Falle i = 0 den höchsten Wert, die sogenannte Elektromotorische Kraft (EMK) erreicht. Mit zunehmender Last, und damit mit zunehmender Stromdichte, fällt die Spannung ab, was seine Ursache in diversen Überspannungen hat.

Bei Brennstoffzellen bzw. Brennstoffzellenstapeln des Standes der Technik wird üblicherweise die gesamte elektrochemisch aktive Fläche einer Brennstoffzelle betrieben. Ein höherer Bedarf an Leistung wird dabei üblicherweise gemäß P = U · I durch Erhöhung der Stromproduktion einer Brennstoffzelle befriedigt, was wiederum durch gesteigert Brennstoffzufuhr realisiert wird. Gemäß der i-U-Kennlinie fällt dabei die Spannung ab.

Starke Spannungsspreizungen sind jedoch nachteilhaft für die Leistungselektroniken, die üblicherweise die Leistungsentnahme aus den Brennstoffzellen bzw. Brennstoffzellenstapeln steuern, da bestimmte elektronische Bauteile dieser Leistungselektroniken durch schnelle Spannungsänderungen Schaden nehmen können. Ferner arbeiten übliche Leistungselektroniken bei annähernd konstanten Spannungen effektiver und tragen so zu einem besseren Wirkungsgrad von Brennstoffzellen bei.

Gemäß der Erfindung wird ein erhöhter Leistungsbedarf an einen Brennstoffzellenstapel nicht durch erhöhte Stromproduktion der einzelnen Brennstoffzellen befriedigt, sondern durch Erhöhung der aktiven Fläche der Brennstoffzellen. Dadurch kann die Sromproduktion der Brennstoffzellen erhöht werden, ohne daß die Spannung abfällt. Dadurch wird große Lastspreizung bei geringer Spannungsspreizung möglich.

Ebenso kann bei verringertem Leistungsbedarf elektrochemisch aktive Fläche in den Brennstoffzellen verringert werden. Das hat den Vorteil, daß die Spannung bei nachlassender Stromproduktion nicht unerwünscht stark ansteigt, wie es im Stand der Technik der Fall ist. Hohe Spannungen können zwei Nachteile aufweisen. Zum einen können bestimmte Bauteile der Leistungselektroniken beschädigt werden. Zum anderen können bei besonders hohen Spannungen (z.B. Einstellungen bei i << i_{max,} wobei iₘₐₓ die maximale Stromdichte einer Brennstoffzelle ist) die Zersetzungsspannungen einiger in den Brennstoffzellen verwendeten Materialien erreicht oder sogar überschritten werden, was unerwünschte elektrochemische Korrosion dieser Materialien zur Folge hat.

Gemäß der vorliegenden Erfindung wird bestimmten Flächen der Brennstoffzellen bei nachlassendem Leistungsbedarf der Brennstoff entzogen, wodurch Strom und Spannung über diesen Flächen auf Null absinken, während andere Flächen annähernd konstant weiterbetrieben werden, Strom produzieren und dadurch eine mittlere Spannung erzeugen. Schädlich hohe Spannungen werden dadurch vermieden.

Ein weiterer Vorteil ist, daß sich durch das erfindungsgemäße Verfahren eine geringere Ausgangsspannung eines Brennstoffzellenstapels bei annähernd gleicher Leistungsentnahme einstellen läßt, was den erwähnten nachteilhaften Wirkungen zu hoher Spannungen auf eine Leistungselektronik und hinsichtlich der elektrochemischen Korrosion vorbeugt.

Weiter vorteilhaft ist, daß das erfindungsgemäße Verfahren bei Brennstoffzellenstapeln, die in einem Brennstoffzellenstapel-Array parallel geschaltet sind, eine Anpassung der Ausgangsspannungen der einzelnen Brennstoffzellenstapel auf den gleichen Zielwert ermöglicht. Dadurch können unerwünschte Querströme zwischen den einzelnen Brennstoffzellenstapeln vermieden werden.

Vorteilhaft können auch die Zuführungskanäle zu den Kühlräumen der Brennstoffzelle, die der Führung eines Kühlmediums dienen, geöffnet oder geschlossen werden. Dabei wird die Größe der aktiven Kühlfläche, die im Wärmekontakt mit der Zellfläche steht, verändert.

In einer vorteilhaften Ausführung der Erfindung werden die Zuführungskanäle zu der Zellfläche mittels einer oder mehrerer verschiebbarer Lochplatten geöffnet oder verschlossen. Eine Lochplatte weist dabei Durchbrechungen auf, die entsprechend der Anordnung der Zuführungskanäle ausgeführt sind. Durch Verschieben der Lochplatten können die Durchbrechungen einer Lochplatte in Überdeckung mit den Zuführungskanälen gebracht werden. In diesem Fall sind die Zuführungskanäle offen und eine Versorgung der entsprechenden Kanalbereiche und somit der Zellfläche mit den Reaktionsmedien ist möglich. Mittels der Lochplatte kann eine entsprechend der Durchbrechungen vorgegebene Anzahl an Zuführungskanälen gleichzeitig geschlossen oder geöffnet werden. Durch Öffnen und Schließen der Zuführungskanäle wird somit die Größe der Zellfläche eingestellt und an die Menge der Reaktionsmedien im geforderten Lastbereich der Brennstoffzelle angepaßt.

In einer weiteren vorteilhaften Ausführung der Erfindung werden die Zuführungskanäle zu der Zellfläche mittels eines Drehsperrschiebers verschlossen. Durch Drehen des Drehsperrschiebers können somit die Zuführungskanäle geöffnet oder geschlossen werden.

Eine bevorzugte Ausführungsform der erfindungsgemäßen Vorrichtung sieht vor, daß innerhalb eines oder mehrerer Ports, über die Brennstoffe oder Oxidanten einem Brennstoffzellenstapel zugeführt werden, Konststoffrohre mit entsprechenden Aussparungen eingebracht werden. Die Rohre werden an den Stapelenden gelagert, beispielsweise mit Gleitlagern, und an einem Ende mit einer Antriebseinheit versehen. Diese Antriebseinheit muß das Rohr um 0° bis etwa 90° oder, je nach Gestaltung des Ports, um 180° drehen können, um 0 bis etwa 90 % der Zuführungskanäle in eine Brennstoffzelle zu sperren. Damit wird eine Leistungsabgabe eines Brennstoffzellenstapels von 100 % bis etwa 5 % erreicht.

Mittels des erfindungsgemäßen Verfahrens ist es möglich, die Größe der Zellfläche im Bereich zwischen 5% und 100% ihrer Gesamtgröße einzustellen. Dadurch wird ein stabiler Betrieb der Brennstoffzelle bei hohem Wirkungsgrad (speziell bei DMFC durch Verminderung des Methanoldurchbruchs) auch im Lastbereich der Brennstoffzelle von unterhalb 10% möglich.

Eine vorteilhafte Variante des erfindungsgemäßen Verfahrens sieht vor, daß bei Nullast, d.h. bei i = 0, die Zuführung von einem oder beiden Reaktionsmedien unterbrochen und der Brennstoffzellenstapel gleichzeitig elektrisch kurzgeschlossen wird.

Das hat den Vorteil, daß hohe Spannungen wie z.B. Leerlaufspannungen, die bei Nullast die Zersetzungsspannungen von eingesetzten Materialien überschreiten können, nicht entstehen können und so eine elektrochemische Korrosion von Komponenten des Stapels verhindert werden kann.

Ursache für die erwähnten Leerlaufspannungen bei Nullast ist, daß nach Betrieb des Brennstoffzellenstapels unter Belastung noch Reaktionsmedien in den einzelnen Brennstoffzellen vorhanden sind und elektrochemisch abreagieren können, wobei sich die Leerlaufspannung einstellt.

Gemäß dem erfindungsgemäßen Verfahren ist es daher bevorzugt, daß der Brennstoffzellenstapel nach Belastung bei Nullast kurzgeschlossen wird, um vorhandene Spannungen abzubauen, und die Zuführung von einem oder beiden Reaktionsmedien unterbrochen wird, um das Fortschreiten der elektrochemischen Reaktion zu unterbinden.

Der Kurzschluß kann durch eine geeignete Vorrichtung, beispielsweise einen Schalter in einer Kurzschlußleitung und einem Entladewiderstand, ausgeführt werden.

Eine weitere vorteilhafte Variante des erfindungsgemäßen Verfahrens sieht vor, daß bei Nullast, d.h. bei i = 0, nicht nur die Zuführung von einem oder beiden Reaktionsmedien unterbrochen wird und der Brennstoffzellenstapel gleichzeitig elektrisch kurzgeschlossen wird, sondern daß auch die Abführung von einem oder beiden Reaktionsmedien unterbrochen wird.

Das gleichzeitige Unterbrechen von Zu- und Abführungskanälen kann insbesondere bei Wasserstoff als Brennstoff nötig sein, da sonst eine Versorgung von der Ausgangsseite her möglich ist. Der abreagierende Wasserstoff kann nämlich ein Vakuum erzeugen, durch das weiterer Brennstoff von der Ausgangsseite angesaugt wird. Das gleiche kann für die Kathodenseite gelten, insbesondere dann, wenn reiner Sauerstoff verwendet wird. Bei Betrieb mit Reformatgas, beispielsweise mit einem H₂-Gehalt von 50 bis 60 Gew.-%, und mit Luft sorgt der Anteil an inerten Komponenten im Gas dafür, daß dieser Effekt deutlich vermindert ist.

Weiter bevorzugt ist es, wenn die Unterbrechung der Zuführung und/oder der Abführung von einem oder beiden Reaktionsmedien durch Verschließen aller Zu- und/oder Abführungskanäle stattfindet.

Das hat den Vorteil, daß die Abschaltung bei Nullast sehr schnell und ohne unnötigen Brenstoffverbrauch erfolgen kann, was den Wirkungsgrad des Brennstoffzellenstapels weiter erhöht.

Für das Öffnen oder Verschließen der Abführungskanäle können prinzipiell dieselben Mittel vorgesehen werden wie für das Öffnen oder Verschließen der Zuführungskanäle.

Die Erfindung wird im Folgenden anhand von Zeichnungen und unter Bezugnahme von Beispielen näher erläutert. Es zeigen:
- Fig. 1: eine erste beispielhafte Ausführung zur Durchführung eines erfindungsgemäßen Verfahrens mittels verschiebbarer Lochplatten in 3 verschiedenen Betriebsstellungen,
- Fig. 2: eine weitere beispielhafte Ausführung zur Durchführung eines erfindungsgemäßen Verfahrens mittels eines Drehsperrschiebers,
- Fig. 3: eine beispielhafte Darstellung zum Vergleich des Wirkungsgrades einer DMFC-Brennstoffzelle im unteren Lastbereich mit voller aktiver Zellfläche gegenüber verringerter aktiver Zellfläche.

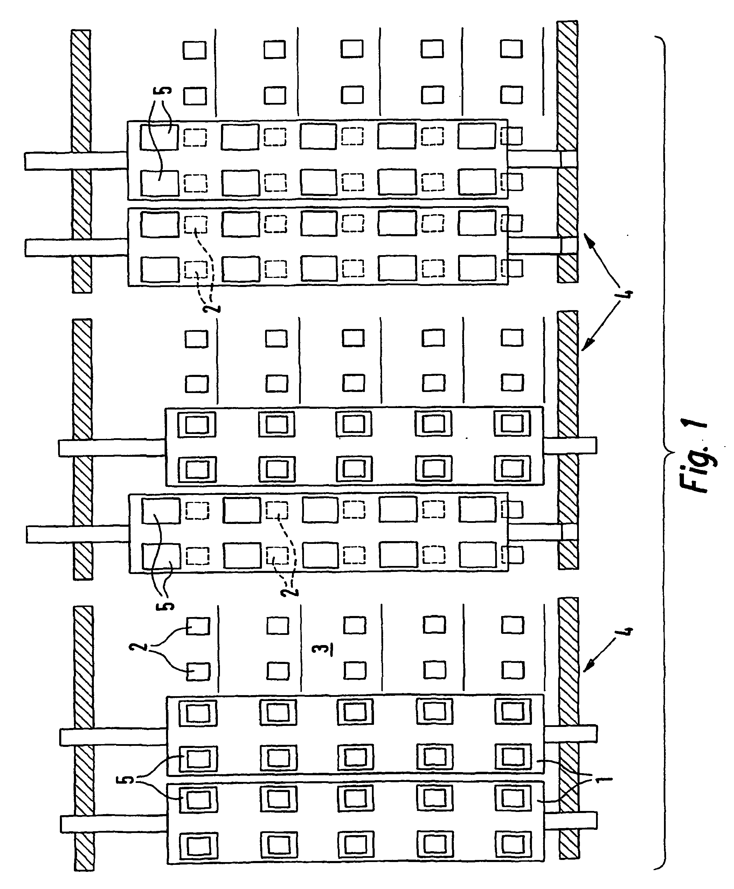

Fig. 1 zeigt eine erste beispielhafte Ausführung zur Durchführung eines erfindungsgemäßen Verfahrens mittels verschiebbarer Lochplatten 1. Dabei ist in einer Schnittdarstellung ein Brennstoffzellenstapel 4 in Seitenansicht gezeigt. Der Brennstoffzellenstapel 4 wird durch die Stapelung von mehreren Fluidverteilerplatten 3 gebildet. In den Fluidverteilerplatten 3 sind Kanalbereiche (nicht dargestellte) ausgeführt, die zur Verteilung der Reaktionsmedien an die nicht dargestellte aktive Zellfläche dienen. Unter einer aktiven Zellfläche wird insbesondere eine Membran-Elektroden-Einheit, auch abgekürzt als MEA bezeichnet, verstanden. Eine MEA umfaßt dabei eine Anode, eine Kathode und eine dazwischen angeordnete, protonenleitende Elektrolytmembran. Mittels der protonenleitenden Elektrolytmembran (PEM) wird ein Protonentransport von der Anode zur Kathode gewährleistet. Die MEA ist dabei zwischen den Fluidverteilerplatten 3 angeordnet, welche von den Zuführungskanälen 2 mit den Reaktionsmedien versorgt werden.

Die Zuführungskanäle 2 und somit der Zugang zu den entsprechenden Kanalbereichen werden mittels Lochplatten 1 verschlossen. Die Lochplatten 1 sind senkrecht zu den Fluidverteilerplatten 3 und somit senkrecht zu den Zuführungskanälen 2 angeordnet. Die Lochplatten 1 weisen Durchbrechungen 5 auf, die entsprechend der Anordnung der Zuführungskanäle 2 ausgeführt sind. Durch Verschieben einer Lochplatte 1 können die Durchbrechungen 5 in der Lochplatte 1 in Deckung zu den Zuführungskanälen 2 gebracht werden, wodurch eine Versorgung des entsprechenden Kanalbereichs und somit der aktiven Zellfläche möglich ist. Werden die Durchbrechungen 5 der Lochplattel nicht in Deckung zu den Zuführungskanälen 2 gebracht, so sind die entsprechenden Kanalbereiche verschlossen und die aktive Zellfläche wird nicht mit Reaktionsmedium versorgt.

Die linke Darstellung in Fig. 1 zeigt eine Anordnung der Lochplatten 1, bei der die Durchbrechungen 5 der einzelnen Lochplatten 1 in Überdeckung mit den Zuführungskanälen 2 liegen. Es ist somit der gesamte Kanalbereich in den einzelnen Fluidverteilerplatten 3 der Brennstoffzelle 4 geöffnet und kann mit den Reaktionsmedien versorgt werden.

In der mittleren Darstellung in Fig. 1 ist die linke Lochplatte 1 derart verschoben, dass die Durchbrechungen 5 der Lochplatte 1 nicht mit den entsprechenden Zuführungskanälen 2 (gestrichelt) in Deckung liegen. In dem dargestellten Ausschnitt sind somit 1/3 der Zuführungskanäle 2 verschlossen, und werden nicht von den Reaktionsmedien durchströmt.
Die rechte Darstellung in Fig. 1 zeigt, dass durch Verschieben der zweiten Lochplatte 1 weitere Zuführungskanäle 2 verschlossen werden. Somit sind in dieser Darstellung nur 1/3 der dargestellten Zuführungskanäle geöffnet, welche die Reaktionsmedien in die Kanalbereiche der einzelnen Fluidverteilerplatten 3 und somit an die aktive Zellfläche leiten können.

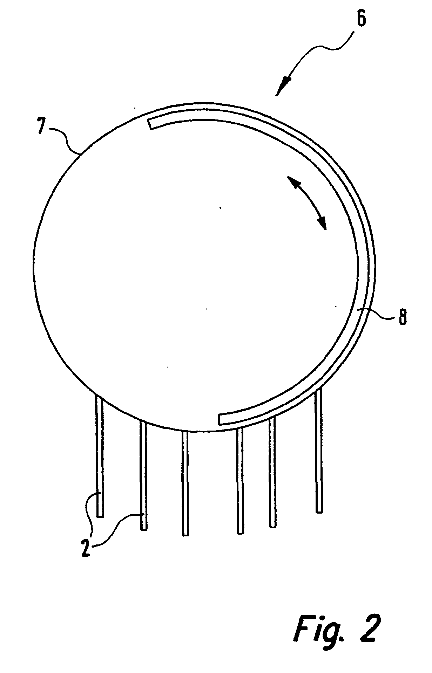

In Fig. 2 ist eine weitere beispielhafte Ausführung zur Durchführung des erfindungsgemäßen Verfahrens dargestellt. Dabei ist ein Drehsperrschieber 6 in Draufsicht dargestellt. Die Zuführungskanäle 2 sind mit dem Drehsperrschieber 6 verbunden, wobei durch Drehen des Drehsperrschiebers 6 nacheinander die Öffnungen der Zuführungskanäle 2 freigegeben oder verschlossen werden. Durch die freigegebenen Zuführungskanäle 2 ist eine Versorgung der aktiven Zellfläche möglich.

Von dem Außenrohr 7, des in Fig. 2 dargestellten Drehsperrschiebers 6 zweigen mehrere Zuführungskanäle 2 zu den Kanalbereichen der Brennstoffzelle und zur aktiven Zellfläche (nicht dargestellt) ab. Innerhalb des Außenrohrs 7 des Drehschiebers 6 ist ein, über einen vorgegebenen Winkelbereich ausgeführtes Bogensegment eines Innenrohrs 8 angeordnet. Der Außenradius des Bogensegments des Innenrohrs 8 entspricht dabei dem Innenradius des Außenrohrs 7, wobei das Innenrohr 8 drehbar innerhalb des Außenrohrs 7 gelagert ist. Durch Drehen des Bogensegments des Innenrohrs 8 können die Zuführungskanäle 2 zu den Kanalbereichen der Brennstoffzelle geöffnet oder geschlossen werden. Dabei wird ein Zuführungskanal 2 dann geschlossen, wenn das Bogensegment des Innenrohrs 8 diesen Zuführungskanal 2 abdeckt. Wird das Bogensegment des Innenrohrs 8 durch Drehen über die Öffnung des Zuführungskanals 2 hinwegbewegt, ist der Zuführungskanal 2 offen.

Selbstverständlich sind die in Fig. 1 und Fig. 2 erläuterten Ausführungen für die Zuführungskanäle auch für die Abführungskanäle durchführbar.

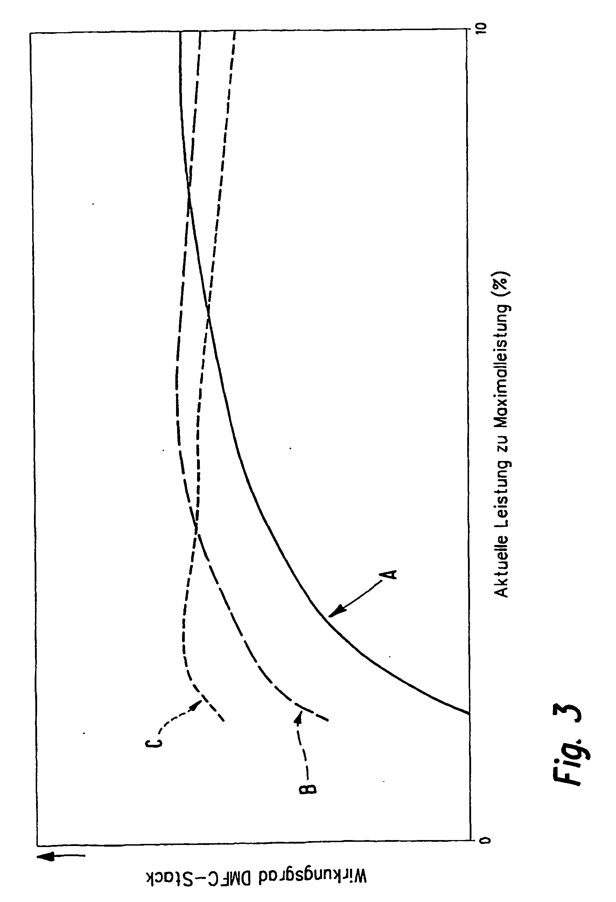

In Fig. 3 ist der Wirkungsgrad einer DMFC-Brennstoffzelle gegenüber der Leistung der Brennstoffzelle dargestellt, wobei lediglich der Leistungsbereich unterhalb 10% der Maximalleistung betrachtet wird. Fig. 3 zeigt dabei, wie sich eine verringerte aktive Zellfläche im unteren Leistungsbereich auf den Wirkungsgrad der Brennstoffzelle auswirkt.

In der Darstellung zeigt A den Verlauf des Wirkungsgrades einer Brennstoffzelle, bei der im betrachteten unteren Leistungsbereich die gesamte Zellfläche von den Reaktionsmedien angeströmt werden. Dabei fällt der Wirkungsgrad unterhalb einer Leistung von ca. 8% von der Maximalleistung stark ab. Hingegen sind die Wirkungsgrade bei einer verringerten aktiven Zellfläche deutlich höher.

Kurve B zeigt den Verlauf des Wirkungsgrades für eine Brennstoffzelle bei der 2/3 der aktiven Zellflächen mit den Reaktionsmedien versorgt wird. Der Wirkungsgrad dieser Brennstoffzelle liegt unterhalb einer Brennstoffzellenleistung von ca. 8% deutlich über dem Wirkungsgrad einer Brennstoffzelle nach Kurve A und fällt erst ab einer Leistung von 5% stark ab.

Wird die aktive Zellfläche auf 1/3 der Gesamtfläche der aktiven Zellfläche verkleinert (Kurve C), so ist der Wirkungsgrad einer solchen Brennstoffzelle unterhalb einer Leistung von ca. 7% deutlich größer als der Wirkungsgrad nach Kurve A und unterhalb einer Leistung von ca. 5% sogar deutlich größer als der Wirkungsgrad nach Kurve B. Erst bei einer Leistung von 2% fällt der Wirkungsgrad (Kurve C) dieser Brennstoffzelle ab.

Mittels des erfindungsgemäßen Verfahrens einer Verkleinerung der aktiven Zellfläche lässt sich in den unteren Leistungsbereichen einer Brennstoffzelle ein deutlich höherer Wirkungsgrad erzielen.

## Patentansprüche

1. Verfahren zum Betrieb einer PEM- oder DMFC-Brennstoffzelle im Minimal- oder Teillastbereich, wobei die Größe der Zellfläche, an der die Brennstoffzellenreaktion stattfindet, durch Öffnen oder Verschließen von Zuführungskanälen, die der Zuführung von einem oder beiden Reaktionsmedien an die Zellfläche dienen, verändert wird, **dadurch gekennzeichnet, dass** auch die Abführungskanäle für die Abführung von einem oder von beiden Reaktionsmedien von der Zellfläche geöffnet oder verschlossen werden.

2. Verfahren nach Anspruch 1, **dadurch gekennzeichnet, dass** die Brennstoffzelle Kühlräume zur Führung eines Kühlmediums umfaßt, wobei die Größe der aktiven Kühlfläche, die in Wärmekontakt mit der Zellfläche steht, durch Öffnen oder Schließen von Zuführungskanälen, die der Zuführung des Kühlmediums dienen, verändert wird.

3. Verfahren nach Anspruch 1 oder 2, **dadurch gekennzeichnet, dass** mittels einer oder mehrerer verschiebbaren Lochplatten (1) die Zuführungskanäle (2) zu der Zellfläche geöffnet oder verschlossen werden.

4. Verfahren nach Anspruch 1 oder 2, **dadurch gekennzeichnet, dass** mittels eines Drehsperrschiebers (6) die Zuführungskanäle (2) zu der Zellfläche geöffnet oder verschlossen werden.

5. Verfahren nach einem der vorangehenden Ansprüche, **dadurch gekennzeichnet, dass** die Größe der Zellfläche zwischen 5% und 100% ihrer Gesamtgröße variierbar ist.

6. Verfahren nach Anspruch 3 oder 4, **dadurch gekennzeichnet, dass** die Abführungskanäle für die Abführung des Kühlmediums von der Kühlfläche verschlossen werden.

7. Verfahren nach Anspruch 1, **dadurch gekennzeichnet, dass** bei Nullast, d.h. bei i = 0, die Zuführung von einem oder beiden Reaktionsmedien unterbrochen und der Brennstoffzellenstapel elektrisch kurzgeschlossen wird.

8. Verfahren nach Anspruch 7, **dadurch gekennzeichnet, dass** sowohl die Zuführung als auch die Abführung von einem oder beiden Reaktionsmedien unterbrochen wird.

9. Verfahren nach Anspruch 7 oder 8, **dadurch gekennzeichnet, dass** die Unterbrechung der Zuführung und/oder der Abführung von einem oder beiden Reaktionsmedien durch Verschließen aller Zu- und/oder Abführungskanäle stattfindet.

10. PEM- oder DMFC-Brennstoffzelle, die zum Betrieb im Minimal- oder Teillastbereich geeignet ist, bei der zur Veränderung der Größe der Zellfläche, an der die Brennstoffzellenreaktion stattfindet, Mittel zum Öffnen und Verschließen von Zuführungskanälen, die der Zuführung von einem oder beiden Reaktionsmedien an die Zellfläche dienen, vorhanden sind, **dadurch gekennzeichnet, dass** Mittel vorgesehen sind, um auch die Abführungskanäle für die Abführung von einem oder von beiden Reaktionsmedien von der Zellfläche zu öffnen oder zu verschließen.

11. PEM- oder DMFC-Brennstoffzelle nach Anspruch 10, **dadurch gekennzeichnet, dass** zur Veränderung der Größe der Kühlfläche, die in Wärmekontakt mit der Zellfläche steht, Mittel zum Öffnen und Verschließen von Zuführungskanälen, die der Zuführung des Kühlmediums in die Kühlräume der Brennstoffzelle dienen, vorhanden sind.

12. PEM- oder DMFC-Brennstoffzelle nach Anspruch 10 oder 11, **dadurch gekennzeichnet, dass** diese Mittel eine oder mehrere Lochplatten (1) oder ein Drehschieber (6) sind.

## Claims

1. Method for operating a PEM or DMFC fuel cell in the minimal or part load range, the size of the cell surface at which the fuel cell reaction takes place being changed by opening or closing supply passages which are used to supply one or both reaction media to the cell surface, **characterized in that** the discharge passages for discharging one or both reaction media from the cell surface are opened or closed.

2. Method according to Claim 1, **characterized in that** the fuel cell comprises cooling spaces for guiding a cooling medium, the size of the active cooling surface which is in thermal contact with the cell surface being changed by opening or closing supply passages which are used to supply the cooling medium.

3. Method according to Claim 1 or 2, **characterized in that** the supply passages (2) leading to the cell surface are opened or closed by means of one or more displaceable perforated plates (1).

4. Method according to Claim 1 or 2, **characterized in that** the supply passages (2) leading to the cell surface are opened or closed by means of a rotary blocking slide (6).

5. Method according to one of the preceding claims, **characterized in that** the size of the cell surface can be varied between 5% and 100% of its total size.

6. Method according to Claim 3 or 4, **characterized in that** the discharge passages for discharging the cooling medium from the cooling surface are closed.

7. Method according to Claim 1, **characterized in that** at zero load, i.e. at i = 0, the supply of one or both reaction media is interrupted and the fuel cell stack is electrically short-circuited.

8. Method according to Claim 7, **characterized in that** both the supply and the discharge of one or both reaction media is interrupted.

9. Method according to Claim 7 or 8, **characterized in that** the interruption to the supply and/or discharge of one or both reaction media is effected by closing all the supply and/or discharge passages.

10. PEM or DMFC fuel cell which is suitable for operation in the minimal or part load range, in which, to change the size of the cell surface at which the fuel cell reaction takes place, means for opening and closing supply passages which are used to supply one or both reaction media to the cell surface are present, **characterized in that** means are provided for opening or closing the discharge passages for discharging one or both reaction media from the cell surface.

11. PEM or DMFC fuel cell according to Claim 10, **characterized in that** to change the size of the cooling surface which is in thermal contact with the cell surface, means for opening and closing supply passages which are used to supply the cooling medium into the cooling spaces of the fuel cell are present.

12. PEM or DMFC fuel cell according to Claim 10 or 11, **characterized in that** these means are one or more perforated plates (1) or a rotary slide (6).

## Revendications

1. Procédé pour exploiter une pile à combustible PEM ou DMFC dans la plage de charge minimale ou partielle, la taille de la surface de pile, sur laquelle a lieu la réaction de pile à combustible, étant modifiée par l'ouverture ou la fermeture de canaux d'alimentation, qui servent à alimenter la surface de la pile en l'un ou les deux milieux de réaction, **caractérisé en ce que** les canaux d'évacuation pour évacuer l'un ou les deux milieux de réaction de la surface de pile, sont également ouverts ou fermés.

2. Procédé selon la revendication 1, **caractérisé en ce que** la pile à combustible comprend des chambres de refroidissement pour conduire un milieu réfrigérant, la taille de la surface active de refroidissement, qui se trouve en contact thermique avec la surface de pile, étant modifiée par l'ouverture ou la fermeture de canaux d'alimentation qui servent à l'alimenter en milieu réfrigérant.

3. Procédé selon la revendication 1 ou 2, **caractérisé en ce que** les canaux (2) alimentant la surface de pile, sont ouverts ou fermés au moyen d'une ou plusieurs plaques perforées (1) déplaçables.

4. Procédé selon la revendication 1 ou 2, **caractérisé en ce que** les canaux (2) alimentant la surface de pile, sont ouverts ou fermés au moyen d'un registre d'arrêt rotatif (6).

5. Procédé selon l'une quelconque des revendications précédentes, **caractérisé en ce que** la taille de la surface de pile peut être variée entre 5% et 100% de sa taille totale.

6. Procédé selon la revendication 3 ou 4, **caractérisé en ce que** les canaux d'évacuation pour évacuer le milieu réfrigérant de la surface de refroidissement sont fermés.

7. Procédé selon la revendication 1, **caractérisé en ce que**, pour une charge nulle, à savoir pour i = 0, l'alimentation en un ou plusieurs milieux de réaction est interrompue, et l'empilement de piles à combustible est court-circuité électriquement.

8. Procédé selon la revendication 7, **caractérisé en ce qu'**aussi bien l'alimentation que l'évacuation d'un ou des deux milieux de réaction, sont interrompues.

9. Procédé selon la revendication 7 ou 8, **caractérisé en ce que** l'interruption de l'alimentation et/ou de l'évacuation d'un ou des deux milieux de réaction a lieu par fermeture de tous les canaux d'alimentation et/ou d'évacuation.

10. Pile à combustible PEM ou DMFC, qui convient au fonctionnement dans la plage de charge minimale ou partielle, dans laquelle des moyens pour ouvrir et fermer les canaux d'alimentation qui servent à alimenter la surface de pile en l'un ou les deux milieux de réaction, sont présents pour modifier la taille de la surface de pile, sur laquelle a lieu la réaction de pile à combustible, **caractérisée en ce que** des moyens sont prévus pour ouvrir ou fermer également les canaux d'évacuation pour évacuer l'un ou les deux milieux de réaction de la surface de pile.

11. Pile à combustible PEM ou DMFC, selon la revendication 10, **caractérisée en ce que** pour modifier la taille de la surface de refroidissement, qui se trouve en contact thermique avec la surface de pile, des moyens sont disponibles pour ouvrir et fermer les canaux d'alimentation qui servent à alimenter les chambres de refroidissement de la pile à combustible en milieu réfrigérant.

12. Pile à combustible PEM ou DMFC, selon la revendication 10 ou 11, **caractérisée en ce que** ces moyens sont une ou plusieurs plaques perforées (1) ou un registre rotatif (6).
